# NEUE EUROPÄISCHE PATENTSCHRIFT

(11) **EP 1 522 439 B2**
(45) Veröffentlichungstag und Bekanntmachung des Hinweises auf die Entscheidung über den Einspruch: **24.07.2013**
(45) Hinweis auf die Patenterteilung: 09.01.2008
(21) Anmeldenummer: 03292476.3
(22) Anmeldetag: 07.10.2003
(51) Int. Cl.: B60H 1/22

(54) **Heizungsanordnung mit PTC-Element, insbesondere für ein Kraftfahrzeug**
Heater with PTC element, particulary for a motor vehicle
Dispositif de chauffage avec élément à coefficient positif, en particulier pour un véhicule automobile

(43) Veröffentlichungstag der Anmeldung: 13.04.2005
(73) Patentinhaber: Behr France Rouffach SAS, 68250 Rouffach (FR)
(72) Erfinder: Brun, Michel, 68740 Rustenhart (FR); Miss, Pascal, 67600 Selestat (DE); Mougey, Mathieu, 68190 Ensisheim (DE)
(74) Vertreter: Grauel, Andreas

(56) Entgegenhaltungen:
- EP-A- 1 340 638
- DE-A- 10 012 320
- DE-A- 10 144 757

## Beschreibung

Die Erfindung betrifft eine Heizungsanordnung mit einem PTC-Element, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

In der deutschen Offenlegungsschrift DE 100 12 320 A1 wird eine Klimaanlage für ein Kraftfahrzeug beschrieben, welche eine Kombiheizeinheit aufweist, die einen elektrischen PTC-Heizkörper mit einem konventionellen Kühlmittelheizkörper baulich integriert. Um eine elektrische Kontaktierung der PTC-Heizelemente trotz der in Längsrichtung der Wärmetauscherrohre endseitig angebrachten Sammelrohre gewährleisten zu können, sind seitlich vorstehende Kontaktfahnen zur elektrischen Verbindung der die PTC-Elemente kontaktierenden Elektrodenbleche vorgesehen.

In der EP 1 340 638 A2 ist ein aus mehreren Modulen zusammengesetzter PTC-Heizkörper offenbart, wobei ein Teil der aus Wellrippen und Elektrodenblechen bestehenden Heizkörpermodule mit PTC-Heizelementen verbunden ist. Ein anderer Teil ist mit Flachelementen, die keine Zuheizfunktion ausweisen, verbunden. Durch entsprechende Kombination dieser Module kann der Zuheizer trotz gleicher Abmessungen auf unterschiedliche elektrische Zuheizleistungen angepasst werden.

In der DE 101 44 757 A1 wird vorgeschlagen, PTC-Heizelemente als Zusatzheizung für Personenfahrzeuge zu verwenden, indem diese unmittelbar im Luftausströmungsbereich von Luftzuführungskanälen für das Fahrzeuginnere vorgesehen werden.

Es ist Aufgabe der Erfindung, eine verbesserte Heizungsanordnung mit PTC-Element zur Verfügung zu stellen.

Diese Aufgabe wird gelöst durch eine Heizungsanordnung mit einem PTC-Element mit den Merkmalen des Anspruchs 1. Vorteilhafte Ausgestaltungen sind Gegenstand der Unteransprüche.

Erfindungsgemäß ist eine Heizungsanordnung mit mindestens einem PTC-Element vorgesehen, das zwischen zwei der elektrischen Anbindung dienenden Kontaktblechen angeordnet ist, wobei mindestens eines der beiden Kontaktbleche außerhalb des Rahmens einen Versatz aufweist, und der versetzte Teil des überstehenden Teils des Kontaktblechs parallel zum restlichen Teil des Kontaktblechs verläuft. Der Versatz verläuft dabei senkrecht zur Ebene des Kontaktblechs. Dies ermöglicht ein leichteres Einstecken.

Der Rahmen ist bevorzugt isolierend ausgebildet, vorzugsweise aus Polyamid.

Der Rahmen weist Abstandshalter auf, welche zwischen einander zugeordneten Kontaktblechen angeordnet sind. Diese Abstandshalter dienen dem Auseinanderhalten der Kontaktbleche und vorzugsweise auch der Anbringung der einzelnen Heizstränge im Rahmen. Hierfür sind für je ein Paar einander zugeordneter Kontaktbleche zwei Abstandshalter auf einander gegenüberliegenden Seiten des Rahmens vorgesehen.

Bevorzugt ist ein Abstand zwischen benachbarten Heizsträngen ausgebildet, welche jeweils durch ein PTC-Element, einem Paar einander zugeordneter Kontaktbleche und Wellrippen gebildet werden.

Die Kontaktbleche und das PTC-Element und/oder die Kontaktbleche und die Wellrippen sind vorzugsweise mittels eines Klebstoffs oder eines Lots miteinander fest verbunden. Derartige Verbindungen lassen sich einfach und kostengünstig herstellen.

Vorzugsweise ist an der Wellrippe auf der der Kontaktseite von Kontaktblech und Wellrippe gegenüberliegenden Seite ein weiteres Blech angebracht. Dabei kann es sich um ein Blech aus einem elektrisch isolierenden Werkstoff, beispielsweise Polyamid, handeln, oder um ein Blech aus Aluminium.

Im Folgenden wird die Erfindung anhand von zwei Ausführungsbeispielen unter Bezugnahme auf die Zeichnung im Einzelnen erläutert. In der Zeichnung zeigen:
- Fig. 1: eine Ansicht auf eine Heizungsanordnung gemäß dem ersten Ausführungsbeispiel,
- Fig. 2: eine Ansicht auf eine Heizungsanordnung gemäß einer Abwandlung des ersten Ausführungsbeispiels, und
- Fig. 3: eine Ansicht auf eine Heizungsanordnung gemäß dem zweiten Ausführungsbeispiel.

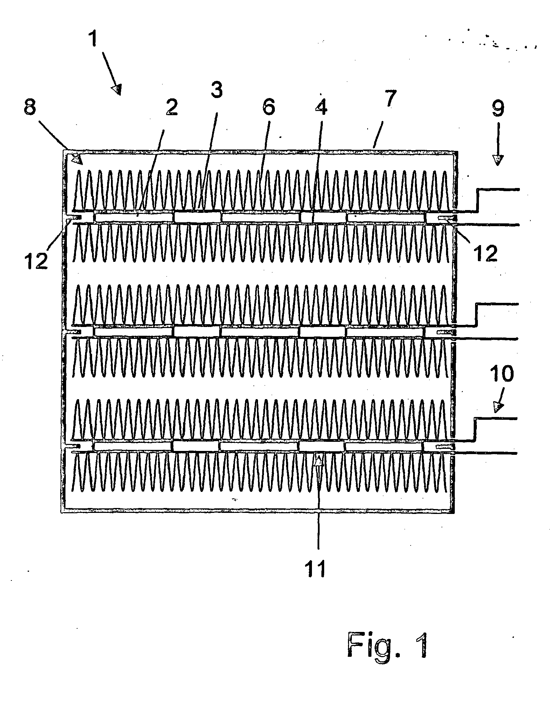

Bei einer PTC-Heizungsanordnung 1 gemäß einem ersten Ausführungsbeispiel mit einem Keramik-PTC-Element 2 ist das PTC-Element 2 zwischen zwei parallel zueinander angeordneten Kontaktblechen 3 (Pluspol) und 4 (Minuspol) eingeklebt, vorliegend mittels eines Klebstoffes (nicht dargestellt). Alternativ kann beispielsweise auch eine Lot-Verbindung vorgesehen sein. Auf den jeweils dem PTC-Element 2 gegenüberliegenden Seiten der Kontaktbleche 3 und 4 sind mittels einer entsprechenden Klebe-Verbindung Wellrippen 6 angebracht. Je zwei Wellrippen 6, zwei Kontaktbleche 3 und 4 und ein PTC-Element 2 bilden einen Heizstrang 8. Die Heizungsanordnung 1 wird durch eine Mehrzahl von Heizsträngen 8 gebildet, wobei in Fig. 1 nur drei Heizstränge 8 dargestellt sind. Um die zuvor beschriebene Heizungsanordnung 1 herum ist ein Kunststoff-Rahmen 7, vorliegend aus Polyamid, angeordnet. Die Strömungsrichtung der Luft liegt bei Fig. 1 in Blickrichtung.

Zwischen den Kontaktblechen 3 und 4 liegt eine Spannung von 13 V an, die Spannung kann jedoch auch größer sein, bspw. 48 V. Die Kontaktbleche 3 und 4 stehen auf einer Seite des Kunststoff-Rahmens 7 über, wobei sie einen Stecker 9 bilden. Dabei ist der überstehende Teil 10 des ersten Kontaktblechs 3 derart zweifach um 90° gebogen, dass der überstehende Teil 10 parallel zum restlichen Teil 11 verläuft, welcher im Kunststoff-Rahmen 7 angeordnet ist, wodurch der Abstand zwischen den beiden Kontaktblechen 3, 4 außerhalb des Kunststoff-Rahmens 7 vergrößert wird.

Um die beiden Kontaktbleche 3 und 4 beabstandet zu halten, sind Abstandshalter 12 vorgesehen, die am Kunststoff-Rahmen 7 als nach innen vorstehende Stege ausgebildet sind, und auf einer Seite von den Enden der Kontaktbleche 3 und 4 zwischen dieselben eindringen. Auf der anderen Seite, im Bereich des Endes des restlichen Teils 11, ist der Abstandshalter 12 zwischen den beiden Kontaktblechen 3 und 4 angeordnet. Die Abstandshalter 12 dienen ferner der Befestigung der einzelnen Heizstränge 8 im Kunststoff-Rahmen 7.

Die Heizstränge 8 können hierbei als Standard-Elemente dienen, welche in unterschiedliche Rahmen eingesetzt werden können, wodurch die Herstellungskosten verringert werden.

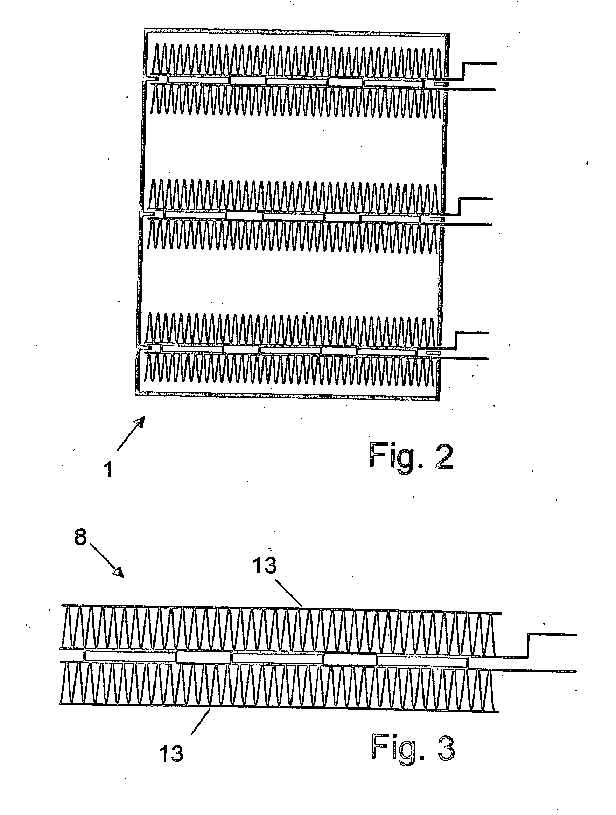

Gemäß einer in Fig. 2 dargestellten Abwandlung des ersten Ausführungsbeispiels ist der Abstand zwischen zwei benachbarten Heizsträngen 8 vergrößert ausgebildet, so dass der Druckabfall der Luft verringert wird. Es können hierbei die gleichen Heizstränge 8 verwendet werden, wie bei der zuvor beschriebenen Grundform.

Fig. 3 zeigt einen Heizstrang 8 gemäß einem zweiten Ausführungsbeispiel, wobei auf der Außenseite des Heizstrangs 8 je ein Blech 13 vorgesehen ist, das aus einem isolierenden Material, vorliegend Polyamid, besteht. Dabei können die Bleche 13 mittels Klebens (gleicher Klebstoff wie zur Verbindung von PTC-Element 2 und den Kontaktblechen 3 bzw. 4 und/oder zur Verbindung von Kontaktblech 3 oder 4 und Wellrippe 6 verwendet wird) oder mittels einer Lot-Verbindung an der Wellrippe 6 fest angebracht sein.

### Bezugszeichenliste

- 1: Heizungsanordnung
- 2: PTC-Element
- 3: Kontaktblech
- 4: Kontaktblech
- 6: Wellrippe
- 7: Kunststoff-Rahmen
- 8: Heizstrang
- 9: Stecker
- 10: überstehender Teil
- 11: restlicher Teil
- 12: Abstandshalter
- 13: Blech

## Patentansprüche

1. Heizungsanordnung weich eine Mehrzahl von Helzsträngen aufweist, wobei ein PTC-Element (2) zwischen zwei Kontaktbiechen (3, 4) angeordnet ist und mit Wellrippen einen Heizstrang bildet, wobei die Kontaktbleche der elektrischen Anbindung dienen und die Heizungsanordnung (1) einen Rahmen (7) aufweist, der um die Heizungsanordnung herum angeordnet ist, **dadurch gekennzeichnet, dass** mindestens eines der beider Kontaktbleche (3) au-βerhalb des Rahmens (7) einen Versatz aufwelst, wobei der versetzte Teil des überstehenden Teils (10) des Kontaktbiechs (3) parallel zum restlichen Teil (11) des Kontaktblechs (3) verläuft und der Versatz senkrecht zur Ebene des Kantaktblechs verläuft, wobei der Rahmen (7) Abstandshalter (12) aufweist, welche zwischen einander zugeordneten Kontaktblechen (3, 4) angeordnet sind.

2. Heizungsanordnung nach Anspruch 1, **dadurch gekennzeichnet, dass** der Rahmen (7) isollerend ausgebildet ist.

3. Heizungsanordnung nach Anspruch 1 oder 2, **dadurch gekennzeichnet, dass** Je einem Paar einander zugeordneter Kontaktbleche (3, 4) zwei Abstandhalter (12) auf einander gegenüberliegenden Selten des Rahmens (7) vorgesehen sind,

4. Heizungsanordnung einem dervorhergehenden Ansprüche, **dadurch gekennzeichnet, dass** ein Abstand zwischen benachbarten Helzsträngen (8) ausgebildet ist, welche jeweils durch ein PTC-element (2), einem Paar einander zugeordneter Kontaktbleche (3, 4) und Wellrippen (6) gebildet werden.

5. Helzungsanordnung einem dervorhergehende Ansprüche, **dadurch gekennzeichnet, dass** die Kontaktbleche (3, 4) und das PTC-Element (2) mittels eines Klebstoffs oder eines Lots miteinanderverbunden sind.

6. Heizungsanordnung einem dervorhergehenden Ansprüche, **dadurch gekennzeichnet, dass** die Kontaktbleche (3, 4) und die Wellrippen (6) mittels eines Klebstoffs oder eines Lots miteinander verbunden sind,

7. Heizungsanordnung nach einem der vorhergehenden Ansprüche, **dadurch gekennzeichnet, dass** an der Wellrippe (6) auf der der Kontaktseite von Kontaktblech (3, 4) und Wellrippe (6) gegenüberliegenden Seite ein weiteres Blech (13) angebrachtist.

8. Heizungsanordnungnach Anspruch 7, **dadurch gekennzeichnet, dass** das Blech (13) aus einem isolierenden Werkstoff besteht.

9. Heizungsanordnung nach Anspruch 7, **dadurch gekennzeichnet, dass** das Blech (13) aus Aluminium besteht.

10. Heizun sanordnung nach einem der Ansprüche 1 bis 9 **dadurch gekennzeichnet, dass** die Helzungsanordnung (1) mehrere unabhängige Heizstränge (8) umfasst.

## Claims

1. A heater having a plurality of heating sections, a PTC element (2) being positioned between two contact plates (3, 4) and, together with corrugated ribs, forming a heating section, the contact plates serving to make an electrical connection and the heater (1) having a frame (7) which is positioned around the heater, **characterised in that** at least one of the two contact plates (3) has an offset outside the frame (7), the offset part of the projecting part (10) of the contact plate (3) running parallel to the remaining part (11) of the contact plate (3) and the offset running perpendicular to the plane of the contact plate, wherein the frame (7) has spacers (12) which are positioned between mutually allocated contact plates (3, 4).

2. A heater in accordance with claim 1, **characterised in that** the frame (7) is designed to provide insulation.

3. A heater in accordance with claim 1 or 2, charaterised in that for each pair of mutually allocated contact plates (3, 4) two spacers (12) are provided on mutually opposing sides of the frame (7).

4. A heater in accordance with one of the preceding claims, **characterised in that** there is a space between adjacent heating sections (8), which comprising a PTC element (2), a pair of mutually allocated contact plates (3, 4) and corrugated ribs (6).

5. A heater in accordance with one of the preceding claims, **characterised in that** the contact plates (3, 4) and the PTC element (2) are connected to one another by means of an adhesive or solder.

6. A heater in accordance with one of the preceding claims, **characterised in that** the contact plates (3, 4) and the corrugated ribs (6) are connected to one another by means of an adhesive or solder.

7. A heater in accordance with one of the preceding claims, **characterised in that** a further plate (13) is attached to the side of the corrugated rib (6) opposite the side where the contact plate (3, 4) and the corrugated rib (6) are attached.

8. A heater in accordance with claim 7, **characterised in that** the plate (13) is made of an insulating material.

9. A heater in accordance with claim 7, **characterised in that** the plate (13) is made of aluminium.

10. A heater in accordance with one of claims 1 to 9, **characterised in that** the heater (1) comprises a plurality of independent heating sections (8).

## Revendications

1. Dispositif de chauffage qui comporte une pluralité de circuits de chauffage, où un élément CTP (2) est disposé entre deux tôles de contact (3, 4) et forme un circuit de chauffage avec des ailettes ondulées, où les tôles de contact servent au raccordement électrique et le dispositif de chauffage (1) présente un cadre (7) qui est disposé autour du dispositif de chauffage, **caractérisé en ce qu'**au moins l'une des deux tôles de contact (3) présente un décalage à l'extérieur du cadre (7), où la partie décalée de la partie saillante (10) de la tôle de contact (3) s'étend parallèlement à la partie restante (11) de la tôle de contact (3) et le décalage s'étend perpendiculairement au plan de la tôle de contact, où le cadre (7) présente des écarteurs (12) qui sont disposés entre des tôles de contact (3, 4) associées l'une à l'autre.

2. Dispositif de chauffage selon la revendication 1, **caractérisé en ce que** le cadre (7) est conçu de façon isolante.

3. Dispositif de chauffage selon la revendication 1 ou 2, **caractérisé en ce que** pour chaque paire de tôles de contact (3, 4) associées l'une à l'autre, il est prévu deux écarteurs (12) sur des côtés du cadre (7) qui se font face.

4. Dispositif de chauffage selon l'une quelconque des revendications précédentes, **caractérisé en ce qu'**il y a un espacement entre des circuits de chauffage voisins (8) qui sont formés à chaque fois par un élément CTP (2), par une paire de tôles de contact (3, 4) associées l'une à l'autre et par des ailettes ondulées (6).

5. Dispositif de chauffage selon l'une quelconque des revendications précédentes, **caractérisé en ce que** les tôles de contact (3, 4) et l'élément CTP (2) sont assemblés entre eux au moyen d'une colle ou d'une brasure.

6. Dispositif de chauffage selon l'une quelconque des revendications précédentes, **caractérisé en ce que** les tôles de contact (3, 4) et les ailettes ondulées (6) sont assemblées entre elles au moyen d'une colle ou d'une brasure.

7. Dispositif de chauffage selon l'une quelconque des revendications précédentes, **caractérisé en ce qu'**une autre tôle (13) est placée sur l'ailette ondulée (6), sur le côté opposé au côté de contact de la tôle de contact (3, 4) et de l'ailette ondulée (6).

8. Dispositif de chauffage selon la revendication 7, **caractérisé en ce que** la tôle (13) se compose d'un matériau isolant.

9. Dispositif de chauffage selon la revendication 7, **caractérisé en ce que** la tôle (13) est en aluminium.

10. Dispositif de chauffage selon l'une quelconque des revendications 1 à 9, **caractérisé en ce que** le dispositif de chauffage (1) comprend plusieurs circuits de chauffage indépendants (8).
